# EUROPÄISCHE PATENTSCHRIFT

(11) **EP 0 442 110 B1**
(45) Veröffentlichungstag und Bekanntmachung des Hinweises auf die Patenterteilung: **19.01.1994**
(21) Anmeldenummer: 90124692.6
(22) Anmeldetag: 19.12.1990
(51) Int. Cl.: B01D 53/00

(54) **Verfahren zur biologischen Abluftreinigung mit einem Tropfkörpersystem**
Process for biological purification of waste air with a trickle filter system
Procédé pour la purification biologique d'air d'échappement à l'aide d'un système de filtre lent

(30) Priorität: 10.02.1990 DE 4004030
(43) Veröffentlichungstag der Anmeldung: 21.08.1991
(73) Patentinhaber: BAYER AG, 51368 Leverkusen (DE)
(72) Erfinder: Schmidt, Friedrich, Dr., W-5600 Wuppertal 1 (DE); Pascik, Imre, Dr., W-4019 Monheim (DE); Rast, Hans Georg, Dr., W-5060 Bergisch Gladbach (DE); Melin, Thomas, Dr., W-5000 Köln 80 (DE); Rabe, Hansjürgen, Dr., W-5090 Leverkusen 3 (DE)

(56) Entgegenhaltungen:
- EP-A- 0 104 525
- EP-A- 0 133 222
- EP-A- 0 147 721

## Beschreibung

Die Erfindung geht aus von einem Verfahren zur biologischen Abluftreinigung und der Verwendung eines Tropfkörpersystems, bei dem der Abluftstrom durch einen mit einer Waschflüssigkeit berieselten Tropfkörper geleitet wird, der gleichzeitig als Trägerkörper für eine den Schadstoff abbauende Mikroorganismenkultur dient. Verfahren dieser Art sind z.B. beschrieben in dem Artikel von H. Brauer, Umschau 1984, Heft 20, Seite 598 sowie in EP-A-100 024, EP-A-0147721 und EP-A-133 222. Dabei wird das Waschwasser im Gleich- oder im Gegenstrom mit der zu reinigenden Abluft durch den Tropfkörper hindurchgeleitet. Als Trägerkörper werden z.B. Aktivkohle oder Hohlkörper aus Kunststoffen wie Polypropylen, Polyamid oder Polyethylen eingesetzt. Auf der Oberfläche der Trägerkörper wächst allmählich ein Biofilm aus adaptierten Mikroorganismenkulturen auf. Während der Passage der Abluft durch den Tropfkörper werden Abluftinhaltstoffe einerseits durch die Waschflüssigkeit ausgewaschen und andererseits auch direkt von den Mikroorganismen aufgenommen. Besonders bewährt hat sich die biologische Abluftreinigung, wenn die Schadstoffkonzentrationen im großen und ganzen konstant bleiben, d.h. wenn keine Belastungsschwankungen auftreten.

Hier setzt die Erfindung an. Es liegt die Aufgabe zugrunde, ein biologisches Abluftreinigungsverfahren mit erhöhter Flexibilität zu entwickeln, so daß auch bei wechselnder Beladung der Abluft mit Schadstoffen eine sichere Einhaltung von vorgegebenen Grenzwerten gewährleistet werden kann. Insbesondere soll noch eine Stoßbelastung mit doppelter Schadstoffkonzentration aufgefangen werden.

Diese Aufgabe wird, ausgehend von dem eingangs beschriebenen Verfahren, erfindungsgemäß dadurch gelöst, daß der Abluftstrom und die Waschflüssigkeit periodisch alternierend im Gleich- und Gegenstrom durch den Tropfkörper geführt werden. Dies bedeutet, daß periodisch zwischen Gleich- und Gegenstromfahrweise umgeschaltet wird.

Die Frequenz für die alternierende Gleich- und Gegenstromfahrweise liegt vorteilhaft im Bereich von 0,2 bis 2 Umschaltungen pro Stunde.

Als Trägerkörper wird bevorzugt ein retikulierter Polyurethanschaum eingesetzt, der partiell mit Kohlepulver belegt sein kann, das an den Oberflächen des Schaumstoffgerüstes fixiert ist. Zweckmäßig wird der Trägerkörper in Form einer zu einem zylindrischen Körper aufgerollten Polyurethanschaumstoffmatte in den Tropfkörperturm eingesetzt.

Gemäß einer Weiterentwicklung der Erfindung wird die Waschflüssigkeit durch den Tropfkörper rezirkuliert und durch ein Reinigungsfilter geleitet, das den gleichen Trägerkörper mit immobilisierten Mikroorganismen enthält wie der Tropfkörper. Zweckmäßig ist dabei, daß das Reinigungsfilter ebenfalls als Tropfkörper ausgebildet und in der Weise betrieben wird, daß das aus dem ersten Tropfkörper austretende vorgereinigte Gas im Gleichstrom mit der Waschflüssigkeit durch den zweiten Tropfkörper hindurchgeleitet wird.

Das erfindungsgemäße Verfahren hat sich insbesondere bei der Abscheidung von Dichlormethan aus einem Abluftstrom bewährt.

Mit der Erfindung werden folgende Vorteile erzielt:
- Aufgrund der alternierenden Gleichstrom- und Gegenstromfahrweise kann eine höhere Reinigungsleistung erreicht werden. Stoßbelastungen können sicher aufgefangen werden. Die für die Reinigung notwendige Biomasse bildet sich bei dieser Fahrweise im oberen und unteren Teil des Tropfkörperturmes.
- Bei der Verfahrensvariante mit einem nachgeschalteten zweiten Tropfkörperturm als Reinigungsfilter wird die Biomasse hauptsächlich durch Schadstoffe gebildet, die bei der Gegenstromfahrweise mit der Waschflüssigkeit (Wasser) in den zweiten Tropfkörper gelangen und dort abgebaut werden. Der Schadstoffstrom wird so auf beide Tropfkörper verteilt und kann durch die umlaufende Wassermenge beeinflußt werden.
- Die Verwendung von retikuliertem Polyurethan-Etherschaum bietet den Vorteil, daß dieses Material nur ca. 3 % des Reaktionsraumes beansprucht und keine "toten" Räume enthält. Außerdem ist der Strömungswiderstand deutlich geringer als bei anderen Tropfkörpersystemen. Der freie Raum steht daher sowohl für die Gasreinigung als auch für den Zuwachs an Biomasse zur Verfügung. Damit wird eine höhere Standzeit mit einer deutlichen Einsparung von Reinigungszyklen für das Trägermaterial erreicht. Wie oft ein Reinigungszyklus erforderlich ist, hängt von der Art und Menge der zugeführten Schadstoffe, insbesondere von deren Kohlenstoffgehalt, ab.
- Die Verwendung von aufgewickelten Polyurethanmatten als Trägermaterial ermöglicht eine leicht durchführbare mechanische Reinigung ohne Verlust von Trägermaterial und seiner biologischen Reinigungskapazität. Aufgrund seiner Gerüststruktur ist das Trägermaterial auch in feuchtem Zustand nahezu formstabil und hat ein sehr geringes Raumgewicht.
- Bei der Entfernung von Dichlormethan (DCM) aus einem Abluftstrom konnten besonders hohe Abbauraten erzielt werden. Die Reinigungsleistung betrug je nach Rohgaskonzentration 90 % und mehr. Damit konnten z.B. die heute geforderten Grenzwerte der TA-Luft (20 mg/m³) bei Startwerten von 200 mg/m³ in einem Gasstrom von 6 m³ /h deutlich unterschritten werden.

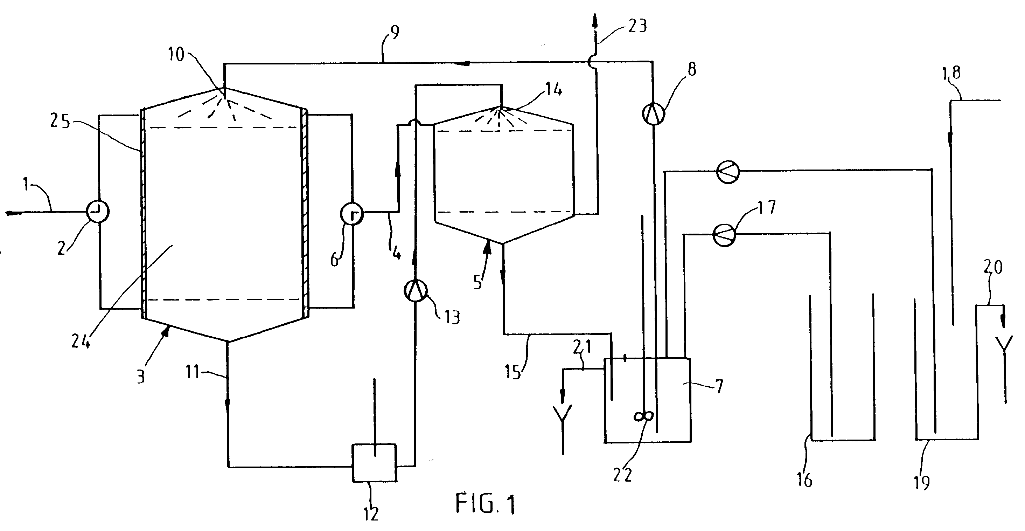

Im folgenden wird die Erfindung anhand eines Ausführungsbeispieles näher erläutert. In der Zeichnung ist ein Fließschema für das erfindungsgemäße Verfahren dargestellt.

Die zu reinigende Abluft wird über die Leitung 1 durch ein Dreiwegeventil 2 in den Tropfkörperturm 3 geleitet. Die vorgereinigte Luft verläßt den Tropfkörperturm 3 durch die Leitung 4 und wird einem zweiten Tropfkörperturm 5 zugeführt. Die Leitung 4 ist über ein Dreiwegeventil 6 entweder mit dem oberen Ende oder dem unteren Ende des ersten Tropfkörperturms 3 verbunden.

Das Waschwasser für den Betrieb des Tropfkörperturms 3 wird aus einem Mischgefäß 7 mittels der Pumpe 8 durch die Leitung 9 zur Sprühdüse 10 im Tropfkörperturm 3 gefördert. Am unteren Ende des Tropfkörperturms 3 läuft das Waschwasser über die Leitung 11 zu einer pH-Wertmeßstelle 12 und wird von dort mittels der Pumpe 13 zur Sprühdüse 14 des zweiten Tropfkörperturms 5 gepumpt. Von dort fließt das Waschwasser durch die Leitung 15 zurück in das Mischgefäß 7. Aus einem Vorratsgefäß 16 wird mittels einer Pumpe 17 ca. 1 %ige wäßrige Sodalösung, die gegebenenfalls weitere Nährstoffkomponenten, wie Harnstoff oder andere stickstoffhaltige Stoffe, sowie Phosphate, in das Mischgefäß 7 gepumpt. Über die Leitung 18 wird einem weiteren Vorratsgefäß 19 frisches Wasser zugeführt. Überschüssiges Wasser fließt aus dem Vorratsgefäß 19 durch die Leitung 20 ab. Überschüssiges Wasser aus dem Mischgefäß 7 wird über die Leitung 21 abgeführt. Zur Durchmischung im Gefäß 7 ist ein Rührwerk 22 eingebaut.

Die Gaszuführung und -entnahme am ersten Tropfkörperturm 3 erfolgt wie schon beschrieben mittels elektrisch umschaltbarer Dreiwegeventile 2 und 6. Die Ventile 2 und 6 werden mit einer vorgegebenen Frequenz zwischen 0,2 und 2 Zyklen pro Stunde derart umgeschaltet, daß das Gas alternierend im Gleich- und im Gegenstrom zum Waschwasser durch den Tropfkörper strömt. Die Schaltung ist dabei so ausgeführt, daß bei Verbindung der Zuführungsleitung 1 mit dem oberen Ende des Tropfkörperturms 3 das untere Ende und bei Verbindung der Leitung 1 mit dem unteren Ende des Turmes das obere Ende mit der Leitung 4 zum zweiten Tropfkörperturm 5 verbunden ist. Im zweiten Tropfkörperturm strömt das vorgereinigte Gas im Gleichstrom mit der Waschflüssigkeit. Das gereinigte Gas strömt hinter der zweiten Stufe durch die Leitung 23 ab. Bei der alternierenden Gleich- und Gegenstromfahrweise im ersten Tropfkörperturm 3 wird sowohl im oberen als auch im unteren Bereich des Tropfkörpers eine ausreichend große Menge einer adaptierten Mikroorganismenmischkultur aktiv gehalten, so daß die Mikroorganismen jeweils im Wechsel einer Fütterungs- und Hungerphase ausgesetzt sind. Die hungernden Mikroorganismen können die Konzentrationsspitzen bei Stoßbelastungen abfangen.

Wie schon beschrieben, wird die Waschflüssigkeit im Kreislauf durch die beiden Tropfkörpertürme 3 und 5 geführt, wobei im zweiten Turm eine Reinigung stattfindet. Der Tropfkörperturm 5 in dar zweiten Stufe hat also eine Doppelfunktion; er dient einesteils der Nachreinigung des Gases und anderenteils der Reinigung der Waschflüssigkeit. Dieser Reinigungseffekt ist insofern von Bedeutung, als bei der Gegenstromfahrweise das aus dem ersten Turm kommende Waschwasser eine dem Phasengleichgewicht entsprechende Konzentration an Schadstoffen enthält, die bei der Passage durch den zweiten Tropfkörperturm 5 abgebaut werden, Andererseits wird in der zweiten Stufe, abgesehen von der Nachreinigung des Gases, der in den Umschaltphasen der Dreiwegeventile 2 und 6 kurzfristig erhöhte Anteil an gasförmigen Schadstoffen reduziert.

Der Tropfkörper 24 im ersten Turm 3 besteht aus einer aufgewickelten Matte aus retikuliertem Polyurethanschaum. Der PU-Schaum bildet dabei ein Gerüst aus dünnen Stäbchen mit einem annähernd dreieckförmigen Querschnitt, das ca. 3 % des gesamten Volumens beansprucht. Aufgrund der Retikulierung sind keine Membranen zwischen den Zellen und damit auch keine geschlossenen Hohlräume oder Nischen vorhanden. Durch den gerüstartigen Aufbau ist das Material auch im Betriebszustand weitgehend formstabil.

Die äußeren Abmessungen einer Matteneinheit sind z.B. 5 x 100 x 200 cm. Diese Einheiten können an den 100 cm-Kanten zu Matten beliebiger Länge vernäht werden. Die erste und letzte Matteneinheit wird entlang der 200 cm-Kante abgeflacht, so daß beim Aufwickeln der langen Matte auf einen Wickelkern eine Spaltbildung vermieden wird. Durch das Aufwickeln entsteht ein nahezu zylindrischer Block des Polyurethanträgermaterials mit einer Höhe von 100 cm und beliebig großem Durchmesser. Diese Blöcke können dann im Tropfkörperturm 3 bis zur gewünschten Höhe aufeinandergestapelt werden. Der Zwischenraum zwischen dem Tropfkörperblock 24 und der Innenwand des Turms 3 wird mit einer aufblasbaren Dichtungsmatte 25 ausgefüllt. Sie besteht aus einer ringförmigen, doppelwandigen Manschette, deren Ränder verschweißt sind. Durch ein Anschlußröhrchen wird dann die um den Tropfkörper 24 gelegte Dichtungsmanschette 25 mit Luft befüllt und dichtet auf diese Weise den Zwischenraum zwischen dem Tropfkörper 24 und der Innenwand des Tropfkörperturmes 3 ab. Dadurch wird die zu reinigende Abluft gezwungen, durch den Tropfkörper 24 zu strömen, auf dessen Oberfläche Mikroorganismen angesiedelt sind.

Der im zweiten Tropfkörperturm 5 angeordnete Tropfkörper 26 ist in seinem Aufbau identisch mit dem ersten Tropfkörper 24. Er hat jedoch im allgemeinen eine geringere Höhe und wird ausschließlich im Gleichstrom betrieben; d.h. die aus dem ersten Tropfkörperturm 3 kommenden Gas- und Wasserströme werden von oben nach unten durch den Tropfkörper 26 hindurchgeleitet.

### Beispiel

Mit der beschriebenen Anlage wurde aus einem Abluftstrom Dichlormethan entfernt. Die gleichmäßige Zudosierung von Dichlormethan (DCM) erfolgte über eine Gaswaschflasche, die mit einer definierten Menge DCM gefüllt war, von außen mit Kühlwasser auf konstanter Temperatur (ca. 10°C) gehalten und mit einer definierten Luftmenge (ca. 1 l/h) feinblasig durchströmt wurde. Diese entsprechend der Sättigung mit DCM beladene Luft wurde in die Zuluftleitung 1 gegeben und damit eine DCM-Konzentration von ca. 300 mg/l eingestellt. Die von einer Zeitschaltuhr gesteuerten Dreiwegeventile 2 und 6 bewirkten im Rhythmus von 1 Stunde die Umschaltung von Gleich- und Gegenstromfahrweise im Tropfkörperturm 3, d.h. die mit DCM beladene Luft und die mit Sodalösung versetzte Waschflüssigkeit von ca. 170 l/h passierten den Tropfkörper 24 alternierend im Gleich- und Gegenstrom.

Der pH-Wert der im Sumpf ablaufenden Waschflüssigkeit wurde an der Meßstelle 12 gemessen und anschließend zur biologischen Nachreinigung dem zweiten Tropfkörperturm 5 zugeführt. Diese Nachreinigung ist von großer Bedeutung, wenn die Apparatur in der Gegenstromphase arbeitet, weil das Waschwasser aus der beladenen Luft ca. 5 mg/l Dichlormethan aufnimmt. Diese Menge würde beim Aufsprühen auf den ersten Tropfkörperturm 3 wieder teilweise an die gereinigte Luft abgegeben und somit den Wirkungsgrad verschlechtern. Durch die biologische Nachreinigung im zweiten Tropfkörperturm wird dieser Nachteil vermieden. Bei der Passage des Waschwassers durch den ersten Turm 3 fällt der pH-Wert von ca. 8,1 auf ca. 7,2 und in der Nachreinigung um ca. 0,1. Durch pH-Wert gesteuerte Zugabe von 1 %iger Sodalösung wird der ursprüngliche pH-Wert wieder hergestellt.

Für die Arbeit benötigen die Mikroorganismen zusätzlich Stickstoff und Phosphor sowie diverse Spurenelemente. Stickstoff und Phosphor wurden in Form von Harnstoff oder Nitrat (0,2 g/l) und K₂HPO₄ (0,1 g/l) gleichzeitig mit der 1 %igen Sodalösung zugesetzt. Die Zugabe von 60 ml Nährsalzlösung erfolgte diskontinuierlich aus einem 60 l Vorratsbehälter, der mit ca. 5 l Trinkwasser pro Stunde beschickt wurde. Der Druckverlust der Luft bei der Passage durch die Apparatur betrug [30 mm] 2,94 mbar bzw. [35 mm WS] 3,43 mbar bei 10 m³/h Luftdurchsatz. Es wurden keine Maßnahmen zur Kühlung oder Heizung der großen Apparateteile getroffen. Somit war die Reaktionstemperatur identisch mit der Raumtemperatur (20° bis 25°C).

Die DCM-Konzentration vor und nach der Reinigung wurde mit einem Flammenionisationsdetektor gemessen. Bei einer Flachenbelastung von 140 m³/m² h unter einer Eingangskonzentration von ca. 300 mg/m³ DCM lag die DCM-Konzentration im Reingas, d.h. an der Ausgangsleitung 23, bei 10 mg/m³. Die Anforderungen der TA-Luft für die Klasse 1 (maximal 20 mg/m³) konnten auch bei Stoßbelastungen mit zweifacher Konzentration eingehalten werden.

Das bei diesem Versuch für die Tropfkörper 24, 26 verwendete PU-Trägermaterial wurde zur Vorbehandlung in eine Suspension spezieller DCM-abbauender Mikroorganismen getaucht und dann in die Gaskolonne eingesetzt. Für diesen Zweck geeignete Mikroorganismenkulturen sind in der Literatur beschrieben (siehe z.B. Kohler, Staub et. al., J. Gen. Mikrobiol. 132, 2837 bis 2843 (1986)).

## Patentansprüche

1. Verfahren zur mikrobiellen Abscheidung von gasförmigen organischen Schadstoffen, aus einem Abluftstrom, bei dem der Abluftstrom durch einen mit einer Waschflüssigkeit berieselten Tropfkörper geleitet wird, der gleichzeitig als Trägerkörper für eine den Schadstoff abbauende Mikroorganismenkultur dient, dadurch gekennzeichnet, daß der Abluftstrom und die Waschflüssigkeit periodisch alternierend im Gleich- und Gegenstrom durch den Tropfkörper geführt werden.

2. Verfahren nach Anspruch 1, dadurch gekennzeichnet, daß die Frequenz für die alternierende Gleich- und Gegenstromfahrweise im Bereich von 0,2 bis 2 Umschaltungen pro Stunde liegt.

3. Verfahren nach Anspruch 1 bis 2, dadurch gekennzeichnet, daß als Trägerkörper retikulierter Polyurethanschaum verwendet wird.

4. Verfahren nach Anspruch 3, dadurch gekennzeichnet, daß als Trägerkörper eine Polyurethanschaumstoffmatte verwendet wird, die zu einem zylindrischen Körper aufgerollt wird.

5. Verfahren nach Anspruch 1 bis 4, dadurch gekennzeichnet, daß die Waschflüssigkeit durch den Tropfkörper rezirkuliert wird und durch ein Reinigungsfilter geleitet wird, das den gleichen Trägerkörper mit immobilisierten Mikroorganismen enthält wie der Tropfkörper.

6. Verfahren nach Anspruch 5, dadurch gekennzeichnet, daß als Reinigungsfilter ein weiterer Tropfkörperturm verwendet wird und daß das aus dem ersten Tropfkörperturm austretende Gas im Gleichstrom mit der Waschflüssigkeit durch den zweiten Troptkörperturm hindurchgeleitet wird.

7. Verfahren nach Anspruch 1 bis 6, dadurch gekennzeichnet, daß Dichlormethan aus einem Abluftstrom entfernt wird.

## Claims

1. Process for removing by microbial means gaseous organic noxious substances from a waste-air flow, in which the waste air is passed through a trickle filter subjected to a trickle of washing liquid, said trickle filter serving at the same time as a substrate for a culture of micro-organisms which break down the noxious substance, characterised in that the waste-air flow and the washing liquid are passed through the trickle filter in periodically alternating manner by co-current and counter-current operation.

2. Process according to Claim 1, characterised in that the frequency with which the co-current and counter-current operations alternate is within the range from 0.2 to 2 switch-overs per hour.

3. Process according to Claims 1 to 2, characterised in that reticulated polyurethane foam is used by way of substrate.

4. Process according to Claim 3, characterised in that a polyurethane foam mat is used by way of substrate, said mat being rolled up so as to form a cylindrical body.

5. Process according to Claims 1 to 4, characterised in that the washing liquid is recirculated through the trickle filter and passed through a purification filter containing the same substrate with immobilised micro-organisms as the trickle filter.

6. Process according to Claim 5, characterised in that a further trickle filter tower is used by way of purification filter and that the gas discharged from the first trickle filter tower is passed co-currently with the washing liquid through the second trickle filter tower.

7. Process according to Claims 1 to 6, characterised in that dichloromethane is removed from a waste-air flow.

## Revendications

1. Procédé pour la précipitation microbienne de substances organiques nuisibles sous forme gazeuse à partir d'un courant d'air d'évacuation, dans lequel le courant d'air d'évacuation est guidé à travers un lit bactérien arrosé par un liquide de lavage, qui sert en même temps de corps de support pour une culture de microorganismes décomposant la substance nuisible, caractérisé en ce que le courant d'air d'évacuation et le liquide de lavage sont guidés périodiquement en alternance selon un écoulement de même sens et à contre-courant à travers le lit bactérien.

2. Procédé selon la revendication 1, caractérisé en ce que la fréquence pour le mode opératoire alternant à écoulement dans le même sens et à contre-courant se situe dans le domaine de 0,2 à 2 commutations par heure.

3. Procédé selon les revendication 1 et 2, caractérisé en ce que, comme corps de support, on utilise de la mousse réticulée de polyuréthanne.

4. Procédé selon la revendication 3, caractérisé en ce que, comme corps de support, on utilise un matelas en mousse de polyuréthanne que l'on enroule pour obtenir un corps cylindrique.

5. Procédé selon les revendication 1 à 4, caractérisé en ce qu'on remet en circulation le liquide de lavage à travers le lit bactérien et on le guide à travers un filtre de purification qui contient le même corps de support que celui du lit bactérien, avec des microorganismes immobilisés.

6. Procédé selon la revendication 5, caractérisé en ce que, comme filtre de purification, on utilise une tour supplémentaire à lit bactérien et, en ce que, le gaz qui s'échappe de la première tour à lit bactérien est guidé à travers la seconde tour à lit bactérien avec le liquide de lavage selon un écoulement de même sens.

7. Procédé selon les revendication 1 à 6, caractérisé en ce qu'on élimine du dichlorométhane d'un courant d'air d'évacuation.
